# FASCICULE DE BREVET EUROPEEN

(11) **EP 1 209 027 B1**
(45) Date de publication et mention de la délivrance du brevet: **07.03.2007**
(21) Numéro de dépôt: 00403286.8
(22) Date de dépôt: 24.11.2000
(51) Int. Cl.: B60P 1/64

(54) **Véhicule utilitaire léger équipé d'un conteneur amovible**
Leichtes Pritschenfahrzeug mit abnehmbarem Behälter
Light utility vehicle with a removable container

(43) Date de publication de la demande: 29.05.2002
(73) Titulaire: CARG'UP SARL, 36260 Sainte Lizaigne (FR)
(72) Inventeur: Sautereau, Dominique Jack Jean, 36100 Issoudun (FR)
(74) Mandataire: Lemoine, Robert

(56) Documents cités:
- DE-A- 2 345 684
- DE-A- 2 558 425
- DE-A- 4 038 404
- DE-U- 1 859 124
- DE-U- 1 950 973
- DE-U- 1 970 368

## Description

La présente invention concerne un véhicule utilitaire comprenant un châssis sur lequel un conteneur amovible est maintenu dans une position de transport, et des moyens de transfert pour déplacer le conteneur de sa position de transport à une position d'attente dans laquelle il est déchargé du châssis.

Les moyens de transfert prévus sur les véhicules utilitaires actuels pour assurer l'installation ou l'enlèvement de conteneurs amovibles sont généralement encombrants et lourds, entraînant de ce fait un poids mort important et limitant par conséquent la charge utile. Un tel véhicule est connu du DE 1970368 U, qui divulgue toutes les caractéristiques du préambule de la revendication 1.

La présente invention se propose plus particulièrement de verrouiller le conteneur de façon sûre et précise dans sa position de transport et pour ce faire, elle a pour objet un véhicule ayant la structure indiquée dans la revendication 1.

Les moyens de transfert selon la présente invention sont très souples et très performants.

Les moyens de levage sont pneumatiques.

Les dispositifs pneumatiques sont généralement plus légers que les dispositifs hydrauliques et permettent d'adapter des conteneurs amovibles sur des véhicules utilitaires légers.

Une telle possibilité était envisageable dans le document DE 2 558 425 A.

Les moyens de levage comprennent au moins un coussin pneumatique, lequel permet d'obtenir la meilleure charge utile sur le véhicule utilitaire léger.

On notera ici que l'actionnement du coussin pneumatique peut être réalisé à l'aide d'un compresseur léger, peu encombrant et dont le fonctionnement peut être assuré à partir de la batterie du véhicule.

Selon un mode de réalisation particulier de l'invention, le coussin pneumatique est monté sur une traverse fixée sur le châssis, au voisinage de l'extrémité arrière de ce dernier, et possède un axe longitudinal qui s'étend verticalement dans le plan longitudinal médian du châssis.

Il suffit en fait de réaliser des opérations classiques de montage pour pouvoir installer le coussin pneumatique sur le châssis, ce qui permet de réduire les coûts de fabrication.

Le coussin pneumatique supporte une barre transversale portée par deux bras parallèles dont l'une des extrémités est pourvue d'un galet et dont l'autre extrémité est articulée sur le châssis autour d'un axe perpendiculaire à l'axe longitudinal de ce dernier, les galets prenant appui contre la paroi inférieure du conteneur lorsque le coussin pneumatique est sous pression.

Ainsi, le conteneur peut se déplacer très facilement par rapport au coussin pneumatique, aussi bien pendant le gonflement que pendant le dégonflement de celui-ci, ce qui élimine les risques d'usure du conteneur et du coussin au niveau de leurs parties venant en contact.

Le véhicule utilitaire selon la présente invention se caractérise en outre en ce que son châssis peut comporter deux rails parallèles disposés longitudinalement pour guider des galets de roulement fixés sur le conteneur, au voisinage du bord antérieur de la paroi inférieure de ce dernier, les rails de guidage étant constitués par des profilés à section en U dont les bases s'étendent verticalement et dont les ailes sont respectivement tournées les unes vers les autres.

Grâce à ce montage particulier, le conteneur peut être déplacé très facilement le long du châssis du véhicule de sorte que son installation ou son enlèvement est réalisable sans difficulté par le conducteur lui-même.

Selon une autre caractéristique du véhicule selon la présente invention, le châssis comporte deux butées situées au voisinage de son extrémité antérieure et définissant la position de transport du conteneur (comme connues du document DE 1950 973 U), et deux leviers de verrouillage prévus sur le conteneur, au voisinage de l'extrémité postérieure de ce dernier, ces leviers étant aptes à pivoter entre une position inactive dans laquelle ils sont immobilisés sur le conteneur et une position active dans laquelle ils sont fixés sur le châssis par des moyens de liaison amovibles lorsque le conteneur est dans sa position de transport.

Le conteneur amovible peut ainsi être verrouillé de façon sûre et précise dans sa position de transport sur le châssis. Son transport peut donc être assuré en toute sécurité quel que soit l'état des routes empruntées par le véhicule.

Avantageusement, les butées peuvent comprendre chacune deux plaques parallèles au châssis, reliées au niveau de leurs extrémités antérieures et définissant entre elles une fente recevant une tige prévue au voisinage de l'extrémité antérieure de la face inférieure du conteneur lorsque celui-ci est dans sa position de transport.

Grâce aux plaques et aux tiges, le conteneur ne peut pas se déplacer en hauteur, ni perpendiculairement à l'axe longitudinal du châssis.

En ce qui concerne les béquilles du conteneur, elles sont de préférence situées au voisinage des coins de la paroi inférieure de ce dernier et réglables en longueur.

Ainsi, lorsque les béquilles reposent sur le sol, elles maintiennent le conteneur parfaitement stable pendant que celui-ci est en cours de chargement ou de déchargement.

Afin de les rendre moins encombrantes lorsque le conteneur est installé sur le châssis du véhicule, les béquilles situées à l'arrière peuvent de préférence comporter une partie inférieure articulée autour d'un axe perpendiculaire au plan longitudinal médian du châssis.

Un mode d'exécution de la présente invention sera décrit ci-après à titre d'exemple nullement limitatif en référence aux dessins annexés dans lesquels :
- la figure 1 est une vue de l'avant d'un véhicule utilitaire conforme à l'invention, un conteneur amovible étant installé sur le châssis de ce véhicule ;
- la figure 2 est une vue de l'extrémité avant du conteneur visible sur la figure 1, mais lorsqu'il repose sur le sol par l'intermédiaire de ses béquilles ;
- la figure 3 est une vue du côté gauche du véhicule visible sur la figure 1 ;
- la figure 4 est une vue agrandie de la partie située dans le cercle IV de la figure 3 ;
- la figure 5 est une vue en coupe selon la ligne V-V de la figure 4 ;
- la figure 6 est une vue de dessus du véhicule visible sur les figures 1 et 3, le conteneur amovible étant représenté en traits mixtes pour plus de clarté ;
- la figure 7 est une vue selon la ligne VII-VII de la figure 6, le coussin pneumatique et le dispositif à galets qui lui est associé étant représentés en traits continus lorsqu'ils sont en position inactive et en traits mixtes lorsqu'ils sont en position active ;
- la figure 8 est une vue schématique partielle de l'arrière du véhicule, cette vue montrant l'un des leviers de verrouillage du conteneur en position active ;
- la figure 9 est une vue analogue à la figure 8 mais montrant le levier de verrouillage en position inactive ; et
- les figures 10 à 15 sont des vues de côté illustrant les principales opérations à effectuer pour enlever le conteneur amovible du châssis et le faire reposer sur le sol par l'intermédiaire de ses béquilles.

Le véhicule représenté sur les dessins est un véhicule utilitaire dont la charge utile est inférieure à 3,5 tonnes et qui comporte un châssis 1 sur lequel est monté un conteneur amovible 2 destiné à être transporté, ce conteneur pouvant par exemple être constitué par une citerne, un fourgon, une cellule de camping-car, un caisson frigorifique ou même un plateau.

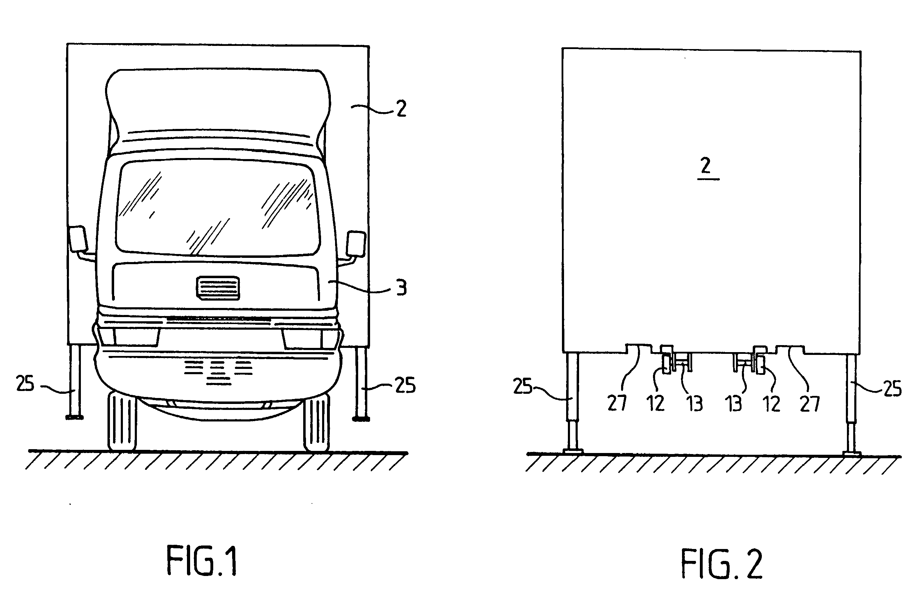

Comme le montre la figure 1, le conteneur 2 est plus large que la cabine 3 et le châssis 1 et fait donc saillie sur les côtés longitudinaux du véhicule.

Il va de soi cependant que sa largeur pourrait être la même que celle de la cabine sans que l'on sorte pour autant du cadre de la présente invention.

Le conteneur 2 peut être transféré de sa position de transport dans laquelle il repose sur le châssis 1 du véhicule à une position d'attente dans laquelle il est déchargé du châssis.

Pour permettre ce transfert, le véhicule comprend un coussin pneumatique 4 monté sur une traverse 5 portée par le châssis 1, au voisinage de l'extrémité arrière de ce dernier.

La traverse 5 est reliée, au niveau de ses deux extrémités, à deux flasques verticaux 6 fixés sur les longerons 7 du châssis, et est située à une hauteur inférieure à celle de ces derniers.

Le coussin pneumatique 4, qui est de conception classique, est relié d'une manière connue en soi à un compresseur non représenté installé sur le châssis en un emplacement approprié entre la cabine et les roues arrières.

Il suffit ainsi d'actionner le compresseur pour le gonfler et de relier sa cavité interne à l'atmosphère pour le dégonfler.

On notera ici que le coussin pneumatique est fixé sur la traverse 5 de telle manière que son axe longitudinal soit situé dans le plan longitudinal médian du châssis 1, qu'il soit gonflé ou non.

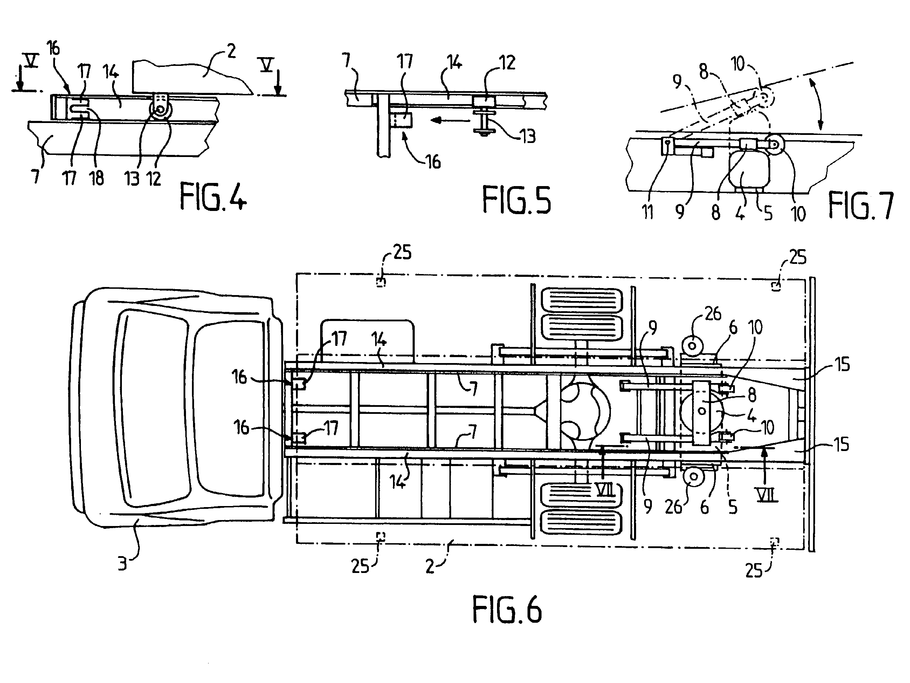

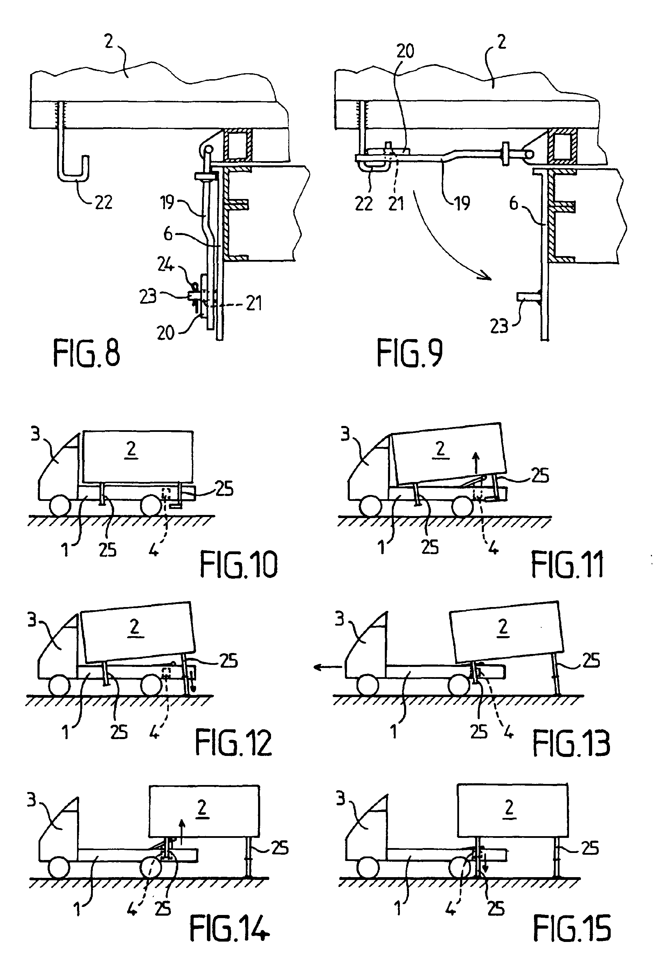

En se référant plus particulièrement aux figures 6 et 7, on pourra constater que le coussin pneumatique supporte une barre transversale 8 portée par deux bras parallèles 9 dont l'une des extrémités est pourvue d'un galet 10 et dont l'autre extrémité est articulée sur le châssis 1, autour d'un axe 11 perpendiculaire à l'axe longitudinal de ce dernier, en avant du coussin pneumatique 4.

Lorsque le coussin 4 est dégonflé, les bras 9 s'étendent horizontalement sous le conteneur 2, comme représenté en traits continus sur la figure 7.

En revanche, lorsqu'il est gonflé, les extrémités libres des bras 9 s'étendent au-dessus du châssis tandis que les galets 10 soulèvent la partie arrière du conteneur 2 en prenant appui contre la paroi inférieure de ce dernier, comme représenté en traits mixtes sur la figure 7.

On précisera ici que le coussin pneumatique est dimensionné pour pouvoir s'allonger d'environ 25 cm lorsqu'il passe de son état dégonflé à son état gonflé.

En se référant maintenant aux figures 2, 4 et 5, on constatera que le conteneur 2 est pourvu de deux galets de roulement 12 montés sur sa paroi inférieure, au voisinage du bord antérieur de celle-ci, ainsi que de deux tiges 13 s'étendant coaxialement avec les galets 12.

Lorsque le conteneur 2 est dans sa position de transport sur le véhicule, les galets 12 sont logés dans deux rails parallèles 14 fixés sur le châssis 1, parallèlement à l'axe longitudinal de ce dernier.

Dans le mode de réalisation représenté, les rails 14 sont constitués par deux profilés à section en U dont les bases s'étendent verticalement et dont les ailes sont respectivement tournées les unes vers les autres.

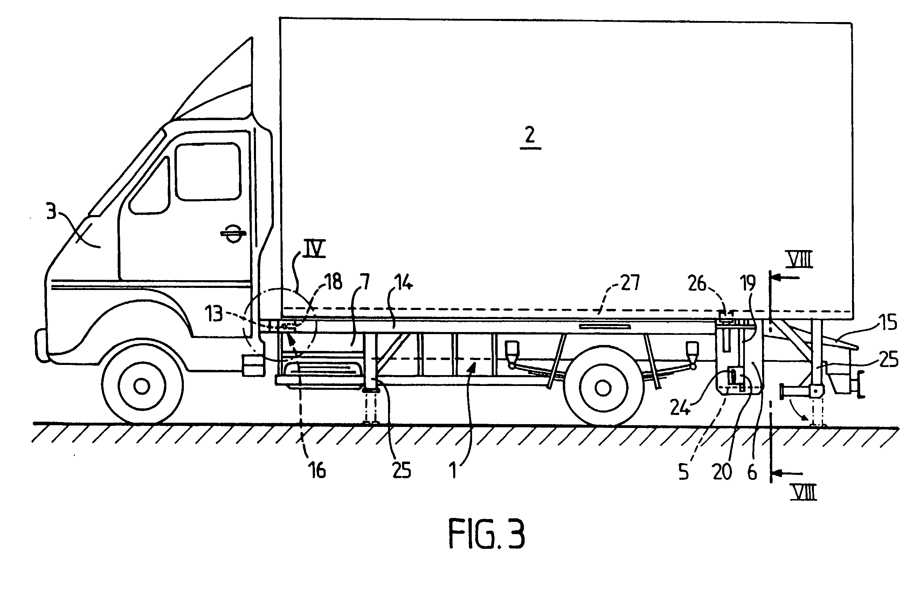

A leur extrémité arrière, les rails 14 sont reliés à des pièces 15 visibles sur les figures 3 et 6. Grâce à ces pièces, qui forment une sorte de gouttière à fond plat s'inclinant vers le bas et dont la largeur augmente en direction de son extrémité inférieure, l'introduction des galets 12 dans les rails 14 et leur extraction hors de ceux-ci peuvent être réalisés très facilement, respectivement lors de l'installation du conteneur 2 sur le châssis et lors de son enlèvement.

En revenant au châssis 1, on notera qu'il comporte deux butées 16 situées au voisinage de son extrémité antérieure, juste derrière la cabine.

Comme le montrent les figures 3 à 5, les butées 16 comprennent chacune deux plaques 17 parallèles au châssis, ces plaques étant reliées au niveau de leurs extrémités antérieures et définissant entre elles une fente 18 dont la hauteur est légèrement plus grande que le diamètre des tiges 13.

Les butées 16 définissent la position de transport du conteneur 2. En effet, lorsque celui-ci est en place sur le châssis, les tiges 13 sont logées dans les fentes 18 et immobilisées contre le fond de ces dernières.

Par ailleurs, le conteneur 2 est pourvu, au voisinage de son extrémité postérieure de deux leviers de verrouillage 19 visibles sur les figures 3, 8 et 9.

Ces leviers sont articulés sur des axes parallèles à l'axe longitudinal du châssis, entre une position inactive dans laquelle ils sont immobilisés contre la paroi inférieure du conteneur, et une position active dans laquelle ils sont fixés le long des flasques 6 servant au montage du coussin pneumatique 4.

On notera que les leviers 19 sont pourvus, au voisinage de leur extrémité libre, d'une plaquette 20 dans laquelle est ménagé un perçage 21.

Les perçages 21 sont destinés à recevoir des crochets 22 portés par la paroi inférieure du conteneur 2 lorsque les leviers 19 sont dans leur position inactive, et à recevoir des doigts 23 fixés horizontalement sur les flasques 6 lorsque les leviers 19 sont dans leur position active.

Afin que les leviers 19 demeurent dans leur position active pendant le transport du conteneur, les doigts 23 sont pourvus d'un trou destiné à recevoir une goupille de fixation 24.

Le conteneur 2 est en outre pourvu de béquilles 25 faisant saillie au voisinage des coins de sa paroi inférieure. Ces béquilles comprennent d'une manière connue en soi une partie supérieure fixée sur la paroi inférieure du conteneur de manière à s'étendre verticalement vers le sol et une partie inférieure montée coulissante dans la partie supérieure.

La longueur des béquilles 25 est réglable. Pour ce faire, leur partie inférieure est pourvue d'une série de trous équidistants tandis que leur partie supérieure comporte un seul trou.

En introduisant une goupille dans le trou des parties supérieures et dans l'un des trous des parties inférieures, on peut évidemment modifier la longueur des béquilles 25 de façon simple et rapide.

On notera ici que la partie inférieure des deux béquilles 25 situées à l'arrière du conteneur est articulée autour d'un axe perpendiculaire au plan longitudinal médian du châssis 1, ce qui rend ces béquilles moins encombrantes.

Dans le mode de réalisation qui vient d'être décrit, le conteneur 2 est plus large que la cabine 3 du véhicule. Il va de soi que sa largeur pourrait être réduite sans que l'on sorte pour autant du cadre de la présente invention.

Il suffirait en effet que les béquilles 25 soient montées sur le conteneur de façon à pouvoir être éloignées du plan longitudinal médian du châssis afin que celui-ci ne gêne pas leur utilisation.

Par ailleurs, le véhicule utilitaire représenté a une charge utile de moins de 3,5 tonnes. Rien ne s'oppose toutefois à ce que la présente invention soit appliquée à des véhicules capables de transporter des charges nettement plus importantes.

On va maintenant décrire les opérations qu'il convient d'effectuer pour enlever le conteneur 2 du châssis 1 et le faire reposer sur le sol par l'intermédiaire de ses béquilles 25.

Ces opérations seront décrites en référence aux figures 10 à 15.

Tout d'abord, on déplace les leviers de verrouillage 19 de leur position active visible sur la figure 8 à leur position inactive visible sur la figure 9, afin que le conteneur 2 puisse être désolidarisé du châssis 1 (figure 10).

On actionne ensuite le compresseur afin de gonfler le coussin pneumatique 4 et de soulever la partie arrière du conteneur 2 (figure 11).

On déploie maintenant les béquilles 25 situées à l'arrière du conteneur 2 jusqu'à ce qu'elles prennent appui sur le sol ou viennent à proximité immédiate du sol, après quoi on relie le coussin pneumatique 4 à l'atmosphère afin de le dégonfler (figure 12).

On avance ensuite le véhicule en ligne droite jusqu'à ce que la partie antérieure du conteneur 2 vienne au-dessus du coussin 4 (figure 13).

On actionne maintenant le compresseur pour gonfler à nouveau le coussin pneumatique 4 et soulever la partie avant du conteneur (figure 14).

On déploie ensuite les béquilles 25 situées à l'avant du conteneur 2 jusqu'à ce qu'elles prennent appui sur le sol ou viennent à proximité immédiate du sol, après quoi on relie le coussin 4 à l'atmosphère afin de le dégonfler (figure 15).

On avance enfin le véhicule en ligne droite afin de l'éloigner du conteneur qui repose sur le sol par l'intermédiaire de ses béquilles.

On conçoit aisément que l'installation du conteneur 2 ou d'un conteneur similaire peut être réalisée en effectuant en sens inverse les opérations qui viennent d'être décrites.

Afin de faciliter le guidage du conteneur 2 le long du châssis 1, celui-ci est de préférence pourvu, au voisinage de son extrémité postérieure, de deux galets 26 visibles sur les figures 3 et 6.

Ces galets, dont les axes de rotation s'étendent verticalement, sont logés dans deux canaux 27 ménagés dans la paroi inférieure du conteneur 2, parallèlement à l'axe longitudinal de ce dernier, et visibles sur les figures 2 et 3.

Il ressort de ce qui précède que la présente invention permet d'installer sur le châssis d'un véhicule utilitaire léger des conteneurs adaptés à des besoins différents ou tributaires de problèmes propres aux utilisateurs, tels que programmations, stocks disponibles, horaires d'accessibilité.

L'installation et l'enlèvement d'un conteneur peuvent donc être réalisés à la demande.

## Revendications

1. Véhicule utilitaire comprenant un châssis (1) sur lequel un conteneur amovible (2) peut être maintenu dans une position de transport, et des moyens de levage (4) montés sur le châssis (1) pour soulever le conteneur (2) au-dessus de ce dernier, le conteneur (2) comportant des béquilles (25) destinées à être appliquées contre le sol lorsqu'il est soulevé par les moyens de levage (4), et le châssis (1) comportant deux rails parallèles (14) disposés longitudinalement pour guider des galets de roulement (12) fixés sur le conteneur (2), au voisinage du bord antérieur de la paroi inférieure de ce dernier, les rails de guidage étant constitués par des profilés à section en U dont les bases s'étendent verticalement et dont les ailes sont respectivement tournées les unes vers les autres, **caractérisé en ce que**
- les moyens de levage comprennent au moins un coussin pneumatique (4) monté sur une traverse (5) fixée sur le châssis (1), au voisinage de l'extrémité arrière de ce dernier, et possèdent un axe longitudinal qui s'étend verticalement dans le plan longitudinal médian du châssis,
- le coussin pneumatique (4) supporte une barre transversale (8) portée par deux bras parallèles (9) dont l'une des extrémités est pourvue d'un galet (10) et dont l'autre extrémité est articulée sur le châssis (1) autour d'un axe (11) perpendiculaire à l'axe longitudinal de ce dernier,
- les galets (10) prennent appui contre la paroi inférieure du conteneur (2) lorsque le coussin pneumatique (4) est sous pression,
- le châssis (1) comporte en outre deux butées (16) situées au voisinage de son extrémité antérieure et définissant la position de transport du conteneur (2), et
- le conteneur comporte deux leviers de verrouillage (19) au voisinage de son extrémité postérieure, ces leviers étant aptes à pivoter entre une position inactive dans laquelle ils sont immobilisés sur le conteneur et une position active dans laquelle ils sont fixés sur le châssis par des moyens de liaison amovibles (24) lorsque le conteneur est dans sa position de transport.

2. Véhicule utilitaire selon la revendication 1, **caractérisé en ce que** les butées (16) comprennent chacune deux plaques (17) parallèles au châssis (1), reliées au niveau de leurs extrémités antérieures et définissant entre elles une fente (18) recevant une tige (13) prévue au voisinage de l'extrémité antérieure de la face inférieure du conteneur (2) lorsque celui-ci est dans sa position de transport.

3. Véhicule selon la revendication 1 ou 2, **caractérisé en ce que** les béquilles (25) du conteneur (2) sont situées au voisinage des coins de la paroi inférieure de ce dernier et sont réglables en longueur.

4. Véhicule selon la revendication 3, **caractérisé en ce que** les béquilles (25) situées à l'arrière du conteneur (2) comportent une partie inférieure articulée autour d'un axe perpendiculaire au plan longitudinal médian du châssis (1).

## Claims

1. Utility vehicle comprising a chassis (1) on which a removable container (2) may be held in a transport position, and raising means (4) mounted on the chassis (1) to raise the container (2) above the latter, the container (2) comprising stands (25) designed to be pressed against the ground when it is raised by the raising means (4), and the chassis (1) comprising two parallel rails (14) placed longitudinally to guide roller wheels (12) attached to the container (2), in the vicinity of the front edge of the bottom wall of the latter, the guide rails consisting of U-shaped sections whose webs extend vertically and whose flanges are respectively turned towards one another, **characterized in that**
- the raising means comprise at least one pneumatic cushion (4) mounted on a crossmember (5) attached to the chassis (1), in the vicinity of the rear end of the latter, and have a longitudinal axis that extends vertically in the longitudinal mid-plane of the chassis,
- the pneumatic cushion (4) supports a crossbar (8) carried by two parallel arms (9) one of whose ends is provided with a wheel (10) and whose other end is articulated on the chassis (1) about an axis (11) perpendicular to the longitudinal axis of the latter,
- the wheels (10) bear against the bottom wall of the container (2) when the pneumatic cushion (4) is pressurized,
- the chassis (1) also comprises two stops (16) situated in the vicinity of its front end and defining the transport position of the container (2), and
- the container comprises two locking levers (19) in the vicinity of its rear end, these levers being capable of pivoting between an inactive position in which they are immobilized on the container and an active position in which they are attached to the chassis by removable linking means (24) when the container is in its transport position.

2. Utility vehicle according to Claim 1, **characterized in that** the stops (16) each comprise two plates (17) parallel to the chassis (1), connected at their front ends and defining between them a slot (18) receiving a rod (13) provided in the vicinity of the front end of the bottom face of the container (2) when the latter is in its transport position.

3. Vehicle according to Claim 1 or 2, **characterized in that** the stands (25) of the container (2) are situated in the vicinity of the corners of the bottom wall of the latter and are adjustable in length.

4. Vehicle according to Claim 3, **characterized in that** the stands (25) situated at the rear of the container (2) comprise a bottom portion articulated about an axis perpendicular to the longitudinal mid-plane of the chassis (1).

## Patentansprüche

1. Nutzfahrzeug, umfassend ein Fahrgestell (1), auf dem ein abnehmbarer Behälter (2) in einer Transportposition gehalten werden kann, und Hebeeinrichtungen (4), die auf dem Fahrgestell (1) montiert sind, um den Behälter (2) über Letzteres zu heben, wobei der Behälter (2) Stützen (25) umfasst, die gegen den Boden den Boden gedrückt werden sollen, wenn er durch die Hebeeinrichtungen (4) angehoben wird, und das Fahrgestell (1) zwei längs angeordnete parallele Schienen (14) umfasst, um Laufrollen (12), die an dem Behälter (2) in der Nähe der vorderen Kante der unteren Wand des Letzteren befestigt sind, zu führen, wobei die Führungsschienen aus Profilen mit U-Querschnitt bestehen, deren Basen sich vertikal erstrecken und deren Flansche jeweils zueinander gedreht sind, **dadurch gekennzeichnet, dass:**
- die Hebeeinrichtungen wenigstens ein Luftkissen (4) umfassen, das auf einer auf dem Fahrgestell (1) befestigten Traverse (5) in der Nähe des hinteren Endes des Fahrgestells montiert ist, und eine sich vertikal in der mittleren Längsebene des Fahrgestells erstreckende Längsachse aufweisen;
- das Luftkissen (4) einen Querträger (8) stützt, der von zwei parallelen Armen (9) getragen wird, von denen eines der Enden mit einer Rolle (10) ausgestattet ist und von denen das andere Ende um eine zu der Längsachse des Fahrgestells senkrechten Achse (11) herum an dem Fahrgestell (1) angelenkt ist;
- die Rollen (10) gegen die untere Wand (2) des Behälters (2) zur Anlage kommen, wenn sich das Luftkissen (4) unter Druck befindet;
- das Fahrgestell (1) außerdem zwei Anschläge (16) umfasst, die sich in der Nähe seines vorderen Endes befinden und die Transportposition des Behälters (2) definieren; und
- der Behälter zwei Verriegelungshebel (19) in der Nähe seines hinteren Endes umfasst, wobei diese Hebel zwischen einer inaktiven Position, in der sie an dem Behälter blockiert sind, und einer aktiven Position, in der sie durch abnehmbare Verbindungseinrichtungen (24) an dem Fahrgestell befestigt sind, wenn sich der Behälter in seiner Transportposition befindet, schwenken können.

2. Nutzfahrzeug nach Anspruch 1, **dadurch gekennzeichnet, dass** die Anschläge (16) jeweils zwei Platten (17) parallel zum Fahrgestell (1) umfassen, die auf Höhe ihrer vorderen Enden verbunden sind und zwischen ihnen eine Spalte (18) bilden, die einen Schaft (13) aufnimmt, der in der Nähe des vorderen Endes der unteren Seite des Behälters (2) vorgesehen ist, wenn sich dieser in seiner Transportposition befindet.

3. Fahrzeug nach Anspruch 1 oder 2, **dadurch gekennzeichnet, dass** sich die Stützen (25) des Behälters (2) in der Nähe der Ecken der unteren Wand des Letzteren befinden und in der Länge verstellbar sind.

4. Fahrzeug nach Anspruch 3, **dadurch gekennzeichnet, dass** die Stützen (25), die sich an dem hinteren Teil des Behälters (2) befinden, einen unteren Teil umfassen, der um eine zu der mittleren Längsebene des Fahrgestells (1) senkrechten Achse herum angelenkt ist.
